# EUROPEAN PATENT SPECIFICATION

(11) **EP 0 743 636 B1**
(45) Date of publication and mention of the grant of the patent: **24.07.2002**
(21) Application number: 96303331.1
(22) Date of filing: 13.05.1996
(51) Int. Cl.: G11B 7/00, G11B 7/085, G11B 21/08

(54) **Disk calibration method in CD-ROM drive system**
Platteneichverfahren in einem CD-ROM Antriebssystem
Procédé d'étalonnage en système d'entraînement CD-ROM

(30) Priority: 13.05.1995 KR 9511815
(43) Date of publication of application: 20.11.1996
(73) Proprietor: SAMSUNG ELECTRONICS CO., LTD., Suwon-City, Kyungki-do (KR)
(72) Inventor: Yun, Ki-bong, Anyang-city, Kyungki-do (KR)
(74) Representative: Musker, David Charles

(56) References cited:
- EP-A- 0 800 128
- US-A- 4 509 154
- US-A- 5 065 383
- PATENT ABSTRACTS OF JAPAN vol. 009, no. 170 (P-373), 16 July 1985 & JP 60 047274 A (SONY KK), 14 March 1985,

## Description

### Background of the Invention

The present invention relates to a disk drive such as CD-ROM drive, and more particularly, to a disk calibration method in a disk drive, which increases the setting accuracy of the number of disk tracks when a pickup searches the disk tracks in the disk drive.

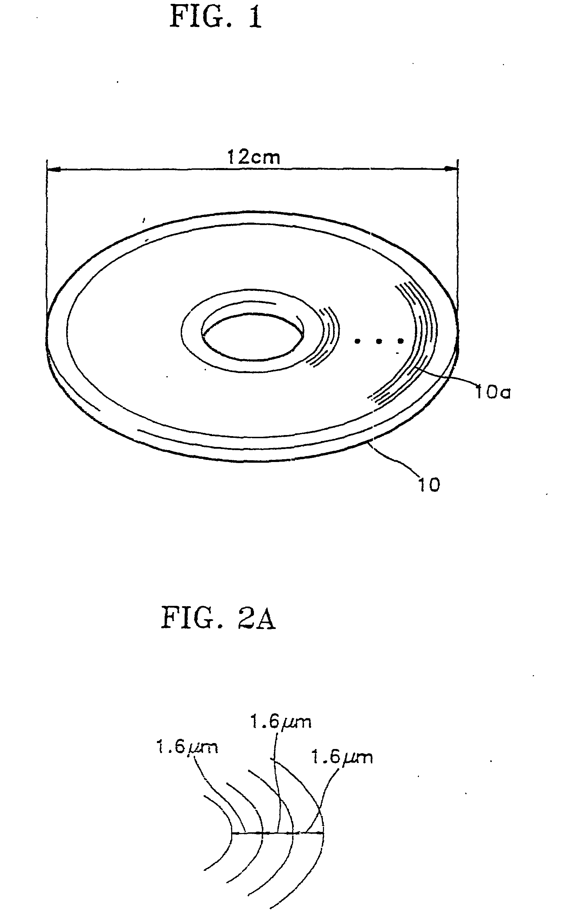

As shown in FIG. 1, a compact disk 10 is a small disk with a 12cm outer diameter. Here, a multitude of fine grooves whose size corresponds to several micrometers are formed, having predetermined digitalized signals such as audio information signals and computer information signals are formed in one side of the compact disk 10. The fine groove is named as a pit and a row of pits is named as a track 10a. The tracks l0a are spirally arranged from the center of the disk and the interval between the tracks, that is, a pitch, is generally 1.6µm as shown in FIG. 2A.

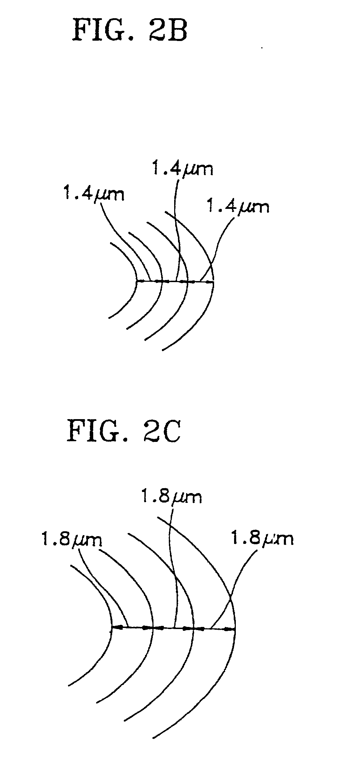

When driving a sled motor for transferring the pickup of the CD-ROM drive, the rotation of the sled motor is controlled using a general frequency generator. That is, when designing the CD-ROM drive, a predetermined number of tracks in the disk are assigned to a pulse generated from the frequency generator. For example, the CD-ROM drive is designed such that the constant number of track zero cross signals are always generated on the basis of a single rotation of the disk. However, due to a problem in the manufacturing of the disk, the width of the pitch formed on the disk may be 1.4µm and 1.8µm as shown in FIGS. 2B and 2C, which are smaller and greater than the standard pitch of 1.6µm, respectively. That is, since the width of the pitch is not uniform, the track zero cross signal the number of which is different for each disk is generated. In addition, the uneven width causes the error in the track calculation when the pickup searches the tracks.

Therefore, in order to solve the above problem relating to the error in the track calculation, the conventional CD-ROM drive adopts a method in which a program area of the disk is divided into 24 pages and the search is performed from a current page to an arbitrary page different from the current page, and then a searching error detected from the search process is reflected in the current page to update data of the current page. However, according to the conventional method, a sufficient data updating should be achieved with respect to each current page so as to secure the following correct search. Also, due to the deviation generated when the pickup searches the tracks from the inner circumference to the outer circumference of the disk, or from the outer circumference to the inner circumference of the disk, a microcomputer inner memory of 24(pages) x2x2 bytes is used, which causes to lower efficiency in the memory usage. Also, when the borders of the 24 pages of the disk are searched, the result obtained by calculating the tr ack number is not reliable. In addition, when measuring the access time in the initial driving state of the CD-ROM drive, the track number is set on the basis of a test performance of only 100 to 500 access time measurements. Accordingly, since the CD-ROM drive is not under a sufficiently stable condition, accuracy on the track search by the pickup is lowered. The reader is referred to Japanese Patent Abstract JP-A-60047274 for an example of a method comprising the steps of scanning the pick-up across a disk and counting the number of tracks during the drive.

### Summary of the Invention

To solve the above problems, it is an object of the present invention to provide a disk calibration method in a disk drive, which increases the setting accuracy of the track number of a disk and improves the efficiency in use of a memory by reducing the error in the track number calculation when a pickup searches the disk tracks in the disk drive.

To achieve the above object, there is provided a disk calibration method in a disk drive, comprising the steps of: (a) jumping a pickup reading out data stored in tracks of a disk, across the tracks; (b) counting the number of tracks detected during the jumping of the pickup; (c) calculating a unit track number of the disk per a single movement of a driving means for jumping the pickup; and should the occasion arise (d) determining a moving amount of the driving means to jump the pickup from a current position to a target track.

Also, the disk calibration method may further comprise the step of: (e) performing a searching operation by jumping the pickup from the current position to the target track.

Here, the step (e) of performing the searching operation comprises the steps of: (e1) jumping the pickup to a target track to check the track number to the target track, thereby initializing the track number with the checked track number; (e2) reading out the current location of the pickup on the disk and calculating number (X) of tracks existing between the current position and the target track, the track number (X) to be jumped by the pickup; (e3) determining whether a long jump of the pickup is required or not; (e4) performing a short jumping of the pickup and determining whether the pickup jumps to the target track if it is determined in the step (e3) that the long jump is not required; (e5) adjusting the initialized track numbers to the target track and returning the process to the step (e2) if the condition of the step (e4) is not satisfied; (e6) checking whether the track number to the target track is equal to a value obtained by adding one to the initial value if the condition of the step (e3) is satisfied; (e7) dividing the track number (X) to be jumped by the pickup by the initialized track number to the target track, the initialized track number being obtained from the pitch if the condition of the step (e6) is not satisfied; (e8) moving the driving means of the pickup on the basis of the value obtained in the step (e7); and (e9) re-adjusting the track number by regulating an average pitch if the condition of the step (e6) is satisfied.

In addition, the step (e9) of re-adjusting the track number comprises the steps of: (f1) comparing the current jumping direction of the pickup and the previous jumping direction to check whether both jumping directions are the same each other; (f2) dividing the track number (X) to be jumped by the pickup by a reference value and adding the obtained value to the previously accumulated value to provide a first accumulated value if it is determined in the step (f1) that the current and previous jumping directions are the same; (f3) determining whether the first accumulated value is over the reference value; (f4) adjusting the unit track number by adding a predetermined value to the unit track number if the first accumulated value is over the reference value in the step (f3); (f5) dividing the track number (X) to be jumped by the pickup by the reference value and subtracting the obtained value from the previously accumulated value to provide a second accumulated value if it is determined in the step (f1) that the current jumping direction is not equal to the previous jumping direction; (f6) determining whether the second accumulated value is below zero; and (f7) adjusting the unit track number by subtracting a predetermined value from the unit track number if the second accumulated value is below zero in the step (f6).

### Brief Description of the Drawings

The above object and advantages of the present invention will become more apparent by describing in detail a preferred embodiment thereof with reference to the attached drawings in which:
FIG. 1 is a perspective view of the structure of a general compact disk for a CD-ROM drive;
FIG. 2A is a diagram partially showing the track structure of the compact disk shown in FIG. 1, with a standard pitch;
FIG. 2B is a diagram partially showing the track structure of the compact disk shown in FIG. 1, with a pitch being smaller than the standard pitch;
FIG. 2C is a diagram partially showing the track structure of the compact disk shown in FIG. 1, with a pitch being greater than the standard pitch;
FIG. 3 is a schematic diagram of a CD-ROM drive for performing a disk calibration method according to the present invention;
FIG. 4 is a block diagram schematically showing the system of the CD-ROM drive of FIG. 3;
FIG. 5 is a flowchart illustrating the step of performing a first subroutine for adjusting track number in the disk calibration method according to the present invention;
FIG. 6 is a flowchart illustrating the step of performing a search subroutine in the disk calibration method according to the present invention; and
FIG. 7 is a flowchart illustrating the step of performing a second subroutine for adjusting track number in the disk calibration method according to the present invention.

### Detailed Description of the Invention

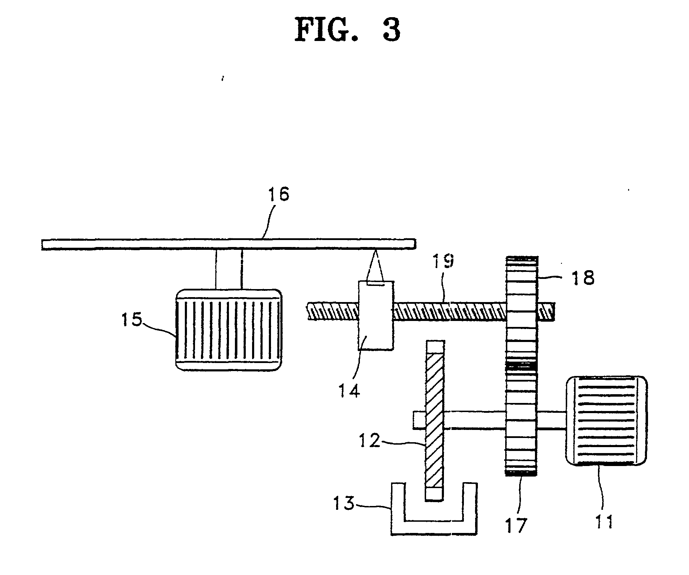

To perform the method according to the present invention, as shown in FIG. 3, a frequency generator 12 for generating a pulse to detect an amount of the rotation of a sled motor 11 in a CD-ROM drive is installed at the end of a shaft of the sled motor 11, and an optical sensor 13 is installed neighboring the frequency generator 12. The optical sensor 13 detects the pulse generated from the frequency generator 12 in accordance with the rotation of the sled motor 11. Here, the CD-ROM drive is designed so that the frequency generator 12 generates 20 pulses and a pickup 14 jumps 480 tracks on a disk 16, during a single rotation of the sled motor 11. The current jumping amount of the pickup 14 is calculated on the basis of the number of pulses generated from the frequency generator 12 while the tracks are being searched by the pickup 14. Here, reference numeral 15 represents a spindle motor for rotating the disk 16. Also, reference numerals 17 and 18 represent gears engaged to each other in accordance with the rotation of the sled motor 11, and reference numeral 19 is a sled with a rack structure, which reciprocates the pickup 14 in accordance with the rotation of the gears 17 and 18.

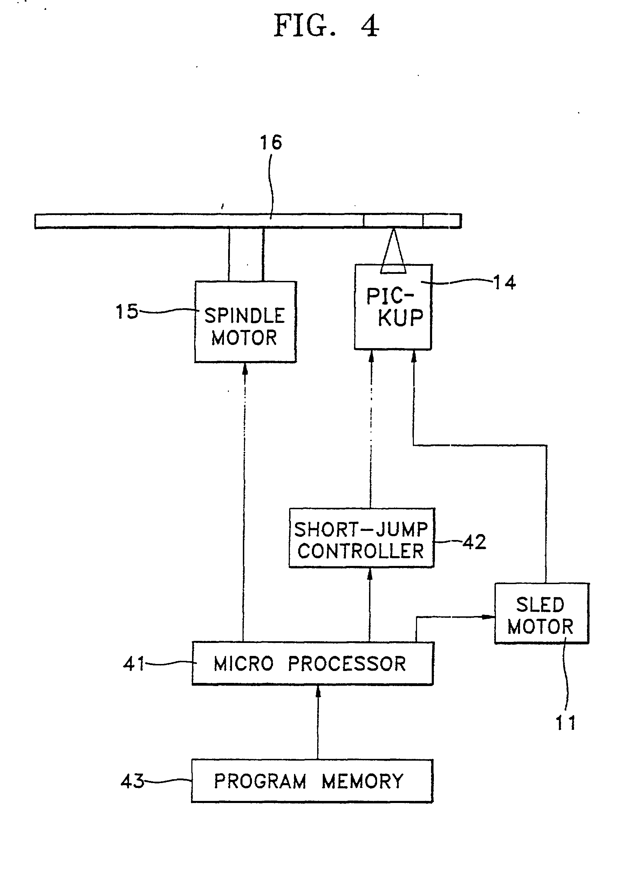

Also, as shown in FIG. 4, the disk drive system includes a microprocessor 41 for controlling the whole system, a short-jump controller 42 for controlling the short jump of the pickup 14 in accordance with a control command from the microprocessor 41, and a program memory 43 for storing various data used for reproducing information from the disk.

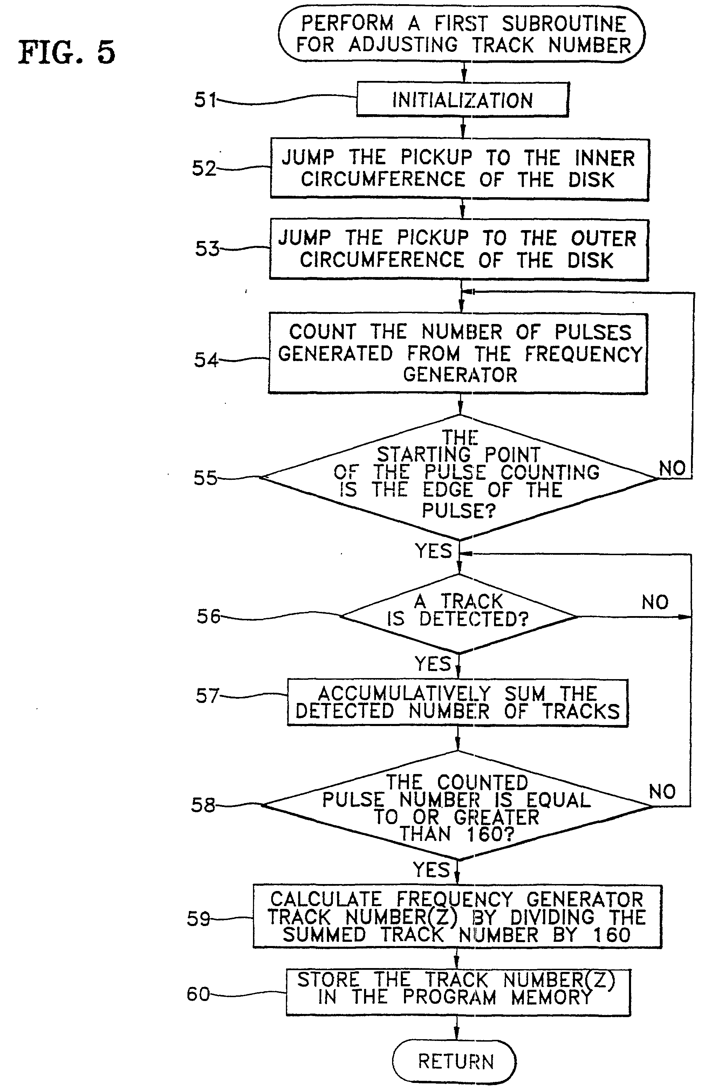

Then, the disk calibration operation of the present invention, performed by the above CD-ROM drive, will be described with reference to FIGS. 5, 6 and 7.

As shown in the flowchart of FIG. 5, a first subroutine for adjusting track number is performed.

When the disk is replaced by a new disk or the CD-ROM drive is reset, the CD-ROM drive initializes itself (step 51). Here, the term "initialization" means a chain of processes for starting such an operation as the focusing, tracking, and motor servo.

After the above initialization is completed, the pickup 14 of the disk drive jumps to the inner circumference of the disk, that is, to a predetermined initial position (step 52).

Then, while the pickup 14 of the disk drive jumps to the outer circumference of the disk (step 53), a counter (not shown) installed in the microprocessor 14 counts the number of pulses generated from the frequency generator 12 in accordance with the rotation of the sled motor 11 (step 54). Here, the track number can be counted by counting the pulse number. At this time, the counting operation is not performed for a predetermined initial period (e.g., 500µsec), so as to stabilize the jumping of the pickup 14.

Also, since the pulse is checked on the basis of the edge of the pulse, it is checked whether the starting point of the pulse counting is the edge of the pulse, prior to the actual counting of the number of pulses generated from the frequency generator 12 (step 55).

If the starting point of the pulse counting is not the edge of the pulse, the counter existing in the microprocessor 41 continuously checks whether the starting point is the edge of the pulse. Otherwise, that is, if the starting point is the edge of the pulse, it is checked whether a track is detected by the pickup 14 (step 56). If the track is not detected by the pickup 14, the pickup 14 continuously checks the detection of the track. Otherwise, that is, if the track is detected by the pickup 14, the counter accumulatively sums the number of the tracks (step 57).

Thereafter, it is checked whether the pulse number counted by the counter of the microprocessor 41 is over 160 (step 58). Here, the number 160 was determined based on the data which is obtained through 8-times rotation of the disk during all experimental process using the CD-ROM drive system designed so that the frequency generator 12 generates 20 pulses per one rotation of the disk.

If the pulse number is not over 160 in step 58, the processes are repeated from step 56. Otherwise, if the pulse number is over 160, a frequency generator track number (Z) is calculated by dividing the summed track number by 160 (step 59) and then the calculated track number is stored (set) in the program memory 43 (step 60). As described above, after the first subroutine for adjusting track number is completed, the process returns to a root program so as to perform another routine.

Through the above chain of processes, the initial disk calibration operation is completed. Here, on the basis of the above track number (Z) stored in the program memory 43, the track number to be jumped by the pickup 14 for performing a search operation is converted into the pulse number of the frequency generator 12 during the program performance.

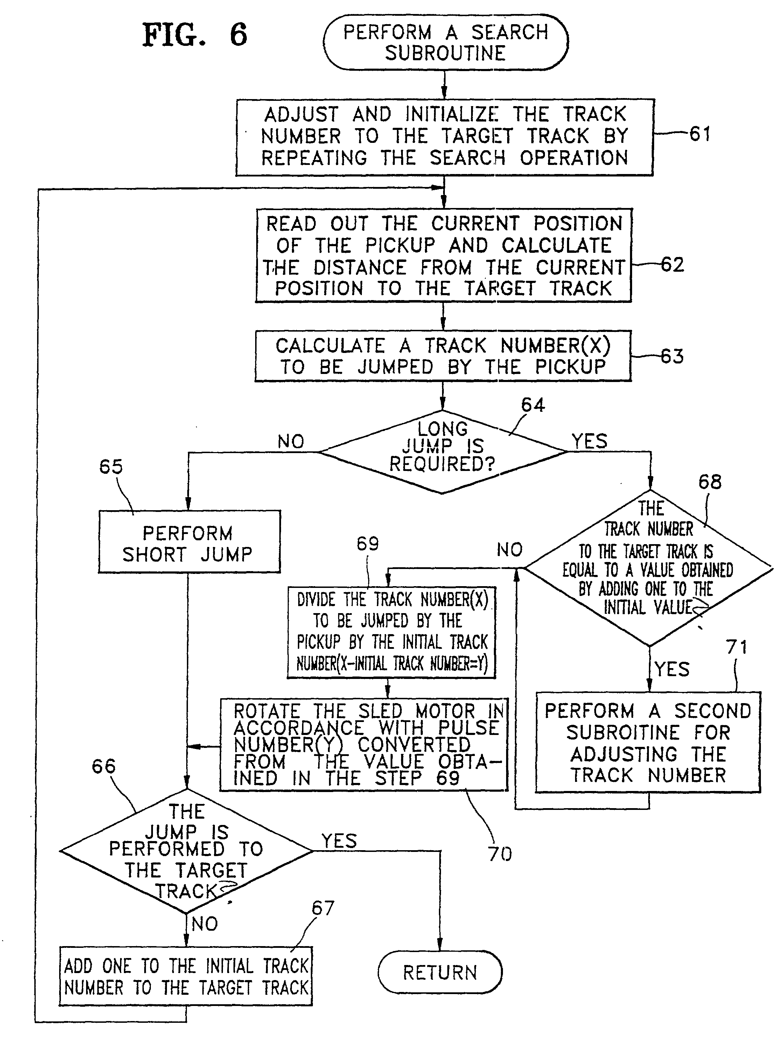

On the other hand, a search subroutine for jumping the pickup to a target track from the current position is performed in the disk drive on the basis of the frequency generator track number (Z) set by the above first subroutine for adjusting the track number. The process of this search subroutine will be described with reference to FIG. 6.

First, the microprocessor 41 controls the pickup 14 jump to the target track using the frequency generator track number Z as data, so as to initialize the track number to the target track. Here, if an error is generated during this jumping process, where the frequency generator track number (Z) is not equal to the track number to the target track, the search operation is repeatedly performed to adjust the track number to the target track, thereby initializing the adjusted track number (step 61).

Next, the current location of the pickup 14 on the disk 16 is read out and the distance from the read out current position to the target track is calculated (step 62). After the calculation, a track number (X) to be jumped by the pickup 14 is calculated (step 63) and then it is determined whether a long jump is required or not (step 64). If the long jump is not required, the pickup 14 performs a short jump (step 65). Then, it is checked whether the short jump is performed to the intended target track (step 66). If the short jump is not performed to the target track, one is added to the initial track number to the target track (step 67) and then the process returns to the step 62. However, if the short jump reaches the target track, the process returns to the root program.

On the other hand, if it is determined in the step 64 that the long search is required, it is check whether the track number to the target track is equal to a value obtained by adding one to the initial value (step 68). If the track number is not equal to the value obtained by adding one to the initial value, the track number (X) to be jumped by the pickup is divided by the initial track number to the target track (step 69). Then, the sled motor 11 is rotated in accordance with a pulse number converted from the value (Y) obtained in the step 69 (step 70), and then the process returns to the above step 66.

On the other hand, if it is determined in the step 68 that the track number to the target track is equal to the value obtained by adding one to the initial value, a second subroutine for adjusting the track number is performed (step 71) and then the process returns to the above step 69. Here, this second subroutine for adjusting the track number is for compensating a search error generated during the search subroutine performance due to a defect of the disk.

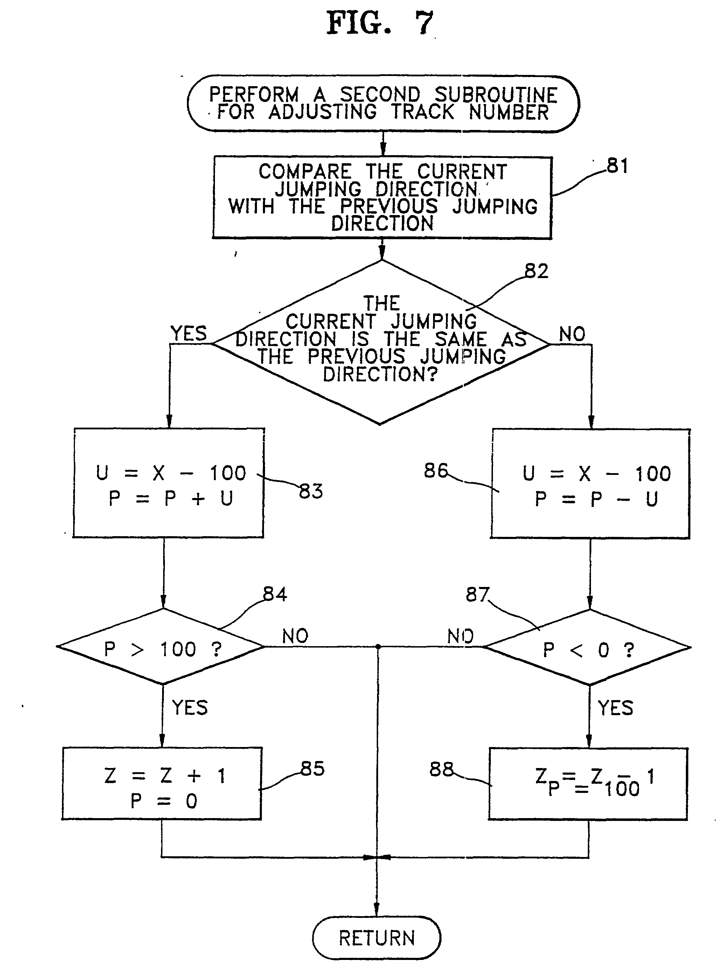

The process of this second subroutine for adjusting the track number will be described with reference to FIG. 7.

As shown in FIG. 7, first, the current jumping direction and the previous jumping direction are compared (step 81). Then, it is checked whether the current jumping direction is the same as the previous jumping direction (step 82). If the current jumping direction is the same as the previous jumping direction, a value (U) is obtained by dividing the track number (X) to be jumped by the pickup 14 by 100. Here, the numeral "100" is arbitrarily set for the convenience of calibration with regard of 300~400 error tracks. The value (U) is added to a value (P) obtained by accumulatively summing the values (U) to set a new value (P) (step 83). Then, it is determined that the newly set value (P) is over 100 (step 84). If the newly set value (P) is over 100, a value obtained by adding one to the frequency generator track number (Z) is set as a new frequency generator track number (Z) and the value (P) is set as zero. This adjusted frequency generator track number is stored in the microprocessor 41. Otherwise, if it is determined in the step 84 that the value (P) is not over 100, the process returns to the root program.

On the other hand, if it is determined in the step 82 that the current jumping direction is not equal to the previous jumping direction, a value (U) is obtained by dividing the track number (X) to be jumped by the pickup 14 by 100 and the value (U) is subtracted from the value (P) to set a new value (P) (step 86). Then, it is determined whether the newly set value (P) is below zero (step 87). If the newly set value (P) is not below zero, the process returns to the root program. Otherwise, if the newly set value (P) is below zero, a value obtained by subtracting one from the frequency generator track number (Z) is set as a new frequency generator track number (Z) and the value (P) is set as 100 (step 88).

As described above, in the disk calibration method in the disk drive according to the present invention, the track number of each disk inserted into the disk drive is adjusted at the initial state in accordance with the number of pulses generated from the frequency generator, thereby improving accuracy in the disk calibration. Also, the error generated during the searching operation of the pickup is compensated through a simple process. Furthermore, since less internal memory is used for performing the above calibration process, the memory efficiency is increased.

## Claims

1. A disk calibration method in a disk drive, comprising the steps of:
(a) jumping a pickup (14) for reading out data stored in tracks (10a) of a disk (16), across the tracks (10a) ;
(b) counting the number of tracks (10a) detected during the jumping of the pickup (14); and
(c) calculating a unit track number of the disk (16) per a single movement of a driving means (18,19) for jumping the pickup (14).

2. A method according to Claim 1, wherein step (c) further comprises calculating an average pitch between the tracks (10a) in accordance with the calculated unit track number.

3. A method according to Claim 1 or 2, wherein said step (b) of counting the track number is not performed for a predetermined initial period to stabilize the jumping of the pickup (14).

4. A method according to any of Claims 1 to 3, including the further step of (d) determining a moving amount of the driving means (18,19) to jump the pickup (14) from a current position to a target track.

5. A method according to Claim 4, further comprising the step of: (e) performing a searching operation by jumping the pickup (14) from the current position to the target track.

6. A method according to Claim 5, wherein said step
(e) of performing the searching operation comprises the steps of:
(e1) jumping the pickup to a target track to check the track number to the target track, thereby initializing the track number with the checked track number;
(e2) reading out the current location of the pickup on the disk and calculating number (X) of tracks existing between the current position and the target track, the track number (X) to be jumped by the pickup;
(e3) determining whether a long jump of the pickup is required or not;
(e4) performing a short jumping of the pickup and determining whether the pickup jumps to the target track if it is determined in said step (e3) that the long jump is not required;
(e5) adjusting the initialized track numbers to the target track and returning the process to said step (e2) if the condition of said step (e4) is not satisfied;
(e6) checking whether the track number to the target track is equal to a value obtained by adding one to the initial value if the condition of said step (e3) is satisfied;
(e7) dividing the track number (X) to be jumped by the pickup by the initialized track number to the target track, the initialized track number being obtained from the pitch if the condition of said step (e6) is not satisfied;
(e8) moving the driving means of the pickup on the basis of the value obtained in said step (e7); and
(e9) re-adjusting the track number by regulating an average pitch if the condition of said step (e6) is satisfied.

7. A method according to claim 6, wherein said step (e9) of re-adjusting the track number comprises the steps of:
(f1) comparing the current jumping direction of the pickup and the previous jumping direction to check whether both jumping directions are the same each other;
(f2) dividing the track number (X) to be jumped by the pickup by a reference value and adding the obtained value to the previously accumulated value to provide a first accumulated value if it is determined in said step (f1) that the current and previous jumping directions are the same;
(f3) determining whether the first accumulated value is over the reference value;
(f4) adjusting the unit track number by adding a predetermined value to the unit track number if the first accumulated value is over the reference value in said step (f3) ;
(f5) dividing the track number (X) to be jumped by the pickup by the reference value and subtracting the obtained value from the previously accumulated value to provide a second accumulated value if it is determined in said step (f1) that the current jumping direction is not equal to the previous jumping direction;
(f6) determining whether the second accumulated value is below zero; and
(f7) adjusting the unit track number by subtracting a predetermined value from the unit track number if the second accumulated value is below zero in said step (f6).

## Patentansprüche

1. Platten-Kalibrierverfahren in einem Plattenlaufwerk, das die folgenden Schritte umfasst:
(a) sprungartiges Bewegen einer Abtasteinrichtung (14) zum Auslesen von in Spuren (10a) einer Platte (16) gespeicherten Daten über die Spuren (10a);
(b) Zählen der Anzahl während des sprungartigen Bewegens der Abtasteinrichtung (14) erfasster Spuren (10a); und
(c) Berechnen einer Einzelspurenzahl der Platte (16) pro einzelner Bewegung einer Antriebseinrichtung (18, 19) zum sprungartigen Bewegen der Abtasteinrichtung (14).

2. Verfahren nach Anspruch 1, wobei Schritt (c) des Weiteren das Berechnen eines durchschnittlichen Abstandes zwischen den Spuren (10a) entsprechend der berechneten Einzelspurenzahl umfasst.

3. Verfahren nach Anspruch 1 oder 2, wobei der Schritt (b) des Zählens der Spurenzahl während einer vorgegebenen Anfangsperiode zum Stabilisieren der sprungartigen Bewegung der Abtasteinrichtung (14) nicht ausgeführt wird.

4. Verfahren nach einem der Ansprüche 1 bis 3, das den weiteren Schritt (d) des Bestimmens des Betrages der Bewegung der Antriebseinrichtung (18, 19) zum sprungartigen Bewegen der Abtasteinrichtung (14) von einer aktuellen Position zu einer Zielspur einschließt.

5. Verfahren nach Anspruch 4, das des Weiteren den folgenden Schritt umfasst: (e) Ausführen eines Suchvorgangs durch sprungartiges Bewegen der Abtasteinrichtung (14) von der aktuellen Position zu der Zielspur.

6. Verfahren nach Anspruch 5, wobei der Schritt (e) des Ausführens des Suchvorgangs die folgenden Schritte umfasst:
(e1) sprungartiges Bewegen der Abtasteinrichtung zu einer Zielspur, um die Spurenzahl bis zu der Zielspur zu prüfen und so die Spurenzahl mit der geprüften Spurenzahl zu initialisieren;
(e2) Auslesen der aktuellen Position der Abtasteinrichtung auf der Platte und Berechnen einer Zahl (X) von Spuren zwischen der aktuellen Position und der Zielspur, wobei die Spurenzahl (X) von der Abtasteinrichtung zu überspringen ist;
(e3) Feststellen, ob ein langer Sprung der Abtasteinrichtung erforderlich ist oder nicht;
(e4) Ausführen eines kurzen Sprungs der Abtasteinrichtung und Feststellen, ob die Abtasteinrichtung zu der Zielspur springt, wenn in dem Schritt (e3) festgestellt wird, dass der lange Sprung nicht erforderlich ist;
(e5) Einstellen der initialisierten Spurenzahlen auf die Zielspur und Zurückführen des Prozesses zu dem Schritt (e2), wenn die Voraussetzung des Schrittes (e4) nicht erfüllt wird;
(e6) Prüfen, ob die Spurenzahl bis zu der Zielspur einem Wert entspricht, der bestimmt wird, indem zu dem Ausgangswert 1 addiert wird, wenn die Bedingung des Schrittes (e3) erfüllt wird;
(e7) Dividieren der Spurenzahl (X), die von Abtasteinrichtung zu überspringen ist, durch die initialisierte Spurenzahl zu der Zielspur, wobei die initialisierte Spurenzahl anhand des Abstandes bestimmt wird, wenn die Bedingung des Schrittes (e6) nicht erfüllt wird;
(e8) Bewegen der Antriebseinrichtung der Abtasteinrichtung auf der Grundlage des in dem Schritt (e7) bestimmten Wertes; und
(e9) Neueinstellen der Spurenzahl durch Regulieren eines durchschnittlichen Abstandes, wenn die Bedingung des Schrittes (e6) erfüllt wird.

7. Verfahren nach Anspruch 6, wobei der Schritt (e9) des Neueinstellens der Spurenzahl die folgenden Schritte umfasst:
(f1) Vergleichen der aktuellen Sprungrichtung der Abtasteinrichtung und der vorhergehenden Sprungrichtung, um zu prüfen, ob beide Sprungrichtungen miteinander übereinstimmen;
(f2) Dividieren der Spurenzahl (X), die von der Abtasteinrichtung zu überspringen ist, durch einen Bezugswert und Addieren des bestimmten Wertes zu dem vorher akkumulierten Wert, um einen ersten akkumulierten Wert zu erzeugen, wenn in dem Schritt (f1) festgestellt wird, dass die aktuelle und die vorhergehende Sprungrichtungen miteinander übereinstimmen;
(f3) Feststellen, ob der erste akkumulierte Wert über dem Bezugswert liegt;
(f4) Einstellen der Einzelspurenzahl durch Addieren eines vorgegebenen Wertes zu der Einzelspurenzahl, wenn der erste akkumulierte Wert in dem Schritt (f3) über dem Bezugswert liegt;
(f5) Dividieren der Spurenzahl (X), die von der Abtasteinrichtung zu überspringen ist, durch den Bezugswert und Subtrahieren des bestimmten Wertes von dem vorher akkumulierten Wert, um einen zweiten akkumulierten Wert zu erzeugen, wenn in dem Schritt (f1) festgestellt wird, dass die aktuelle Sprungrichtung nicht mit der vorhergehenden Sprungrichtung übereinstimmt;
(f6) Feststellen, ob der zweite akkumulierte Wert unter Null liegt; und
(f7) Einstellen der Einzelspurenzahl durch Subtrahieren eines vorgegebenen Wertes von der Einzelspurenzahl, wenn der zweite akkumulierte Wert in dem Schritt (f6) unter Null liegt.

## Revendications

1. Procédé d'étalonnage de disque dans une unité de disque, comportant les étapes consistant à :
(a) faire sauter une tête de lecture (14) pour lire des données mémorisées dans des pistes (10a) d'un disque (16), à travers les pistes (10a),
(b) compter le nombre de pistes (10a) détecté pendant le saut de la tête de lecture (14), et
(c) calculer un nombre de pistes unitaire du disque (16) pour un seul déplacement des moyens d'entraînement (18, 19) pour faire sauter la tête de lecture (14).

2. Procédé selon la revendication 1, dans lequel l'étape (c) comporte en outre le calcul d'un pas moyen entre les pistes (10a) en fonction du nombre de pistes unitaire calculé.

3. Procédé selon la revendication 1 ou 2, dans lequel ladite étape (b) consistant à compter le nombre de pistes n'est pas effectuée pendant une période initiale prédéterminée pour stabiliser le saut effectué par la tête de lecture (14).

4. Procédé selon l'une quelconque des revendications 1 à 3, incluant l'étape (d) supplémentaire consistant à déterminer une longueur de déplacement des moyens d'entraînement (18, 19) pour faire sauter la tête de lecture (14) à partir d'une position courante vers une piste cible.

5. Procédé selon la revendication 4, comportant en outre l'étape consistant à : (e) effectuer une opération de recherche en faisant sauter la tête de lecture (14) à partir de la position courante vers la piste cible.

6. Procédé selon la revendication 5, dans lequel ladite étape (e) consistant à effectuer l'opération de recherche comporte les étapes consistant à :
(e1) faire sauter la tête de lecture vers une piste cible pour contrôler le nombre de pistes jusqu'à la piste cible, de manière à initialiser le nombre de pistes à l'aide du nombre de pistes contrôlé,
(e2) lire l'emplacement courant de la tête de lecture sur le disque et calculer le nombre (X) de pistes existant entre la position courante et la piste cible, le nombre de pistes (X) à franchir par la tête de lecture,
(e3) déterminer si un saut long de la tête de lecture est requis ou non,
(e4) effectuer un saut court de la tête de lecture et déterminer si la tête de lecture saute jusqu'à la piste cible si l'on détermine à ladite étape (e3) que le saut long n'est pas requis,
(e5) ajuster le nombre de pistes initialisé par rapport à la piste cible et faire revenir le traitement à ladite étape (e2) si la condition de ladite étape (e4) n'est pas satisfaite,
(e6) contrôler si le nombre de pistes jusqu'à la piste cible est égal à une valeur obtenue en ajoutant un un à la valeur initiale si la condition de ladite étape (e3) est satisfaite,
(e7) diviser le nombre de pistes (X), qui doivent être franchies par la tête de lecture, par le nombre de pistes initialisé par rapport la piste cible, le nombre de pistes initialisé étant obtenu à partir du pas si la condition de ladite étape (e6) n'est pas satisfaite,
(e8) déplacer les moyens d'entraînement de la tête de lecture sur la base de la valeur obtenue à ladite étape (e7), et
(e9) réajuster le nombre de pistes en régulant un pas moyen si la condition de ladite étape (e6) est satisfaite.

7. Procédé selon la revendication 6, dans lequel ladite étape (e9) de réajustement du nombre de pistes comporte les étapes consistant à :
(f1) comparer la direction de saut courante de la tête de lecture et la direction de saut précédente pour contrôler si les deux directions de saut sont identiques l'une à l'autre,
(f2) diviser le nombre de pistes (X), qui doivent être franchies par la tête de lecture, par une valeur de référence et ajouter la valeur obtenue à la valeur précédemment cumulée pour fournir une première valeur accumulée si l'on détermine à ladite étape (f1) que les directions de saut courante et précédente sont identiques,
(f3) déterminer si la première valeur accumulée est supérieure à la valeur de référence,
(f4) ajuster le nombre de pistes unitaire en ajoutant une valeur prédéterminée au nombre de pistes unitaire si la première valeur accumulée est supérieure à la valeur de référence à ladite étape (f3),
(f5) diviser le nombre de pistes (X), qui doivent être franchies par la tête de lecture, par la valeur de référence et soustraire la valeur obtenue à partir de la valeur précédemment accumulée pour fournir une seconde valeur accumulée si l'on détermine à ladite étape (f1) que la direction de saut courante n'est pas égale à la direction de saut précédente,
(f6) déterminer si la seconde valeur accumulée est inférieure à zéro, et
(f7) ajuster le nombre de pistes unitaire en soustrayant une valeur prédéterminée à partir du nombre de pistes unitaire si la seconde valeur accumulée est inférieure à zéro à ladite étape (f6).
